(19) Europäisches Patentamt
European Patent Office
Office européen des brevets

(11) **EP 1 977 940 B1**

(12) **FASCICULE DE BREVET EUROPEEN**

(45) Date de publication et mention
de la délivrance du brevet:
**27.11.2013   Bulletin 2013/48**

(51) Int Cl.:
***B60T 8/172*** *(2006.01)*

(21) Numéro de dépôt: **08154063.5**

(22) Date de dépôt: **04.04.2008**

(54) **Procédé de détection d'un phénomène d'hydroplanage d'un pneumatique sur une chaussée**

Verfahren zur Erkennung eines Aquaplaning-Phänomens eines Reifens auf einer Fahrbahn

Method of detecting a hydroplaning phenomenon of a tyre on a road

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **06.04.2007   FR 0702575**

(43) Date de publication de la demande:
**08.10.2008   Bulletin 2008/41**

(73) Titulaires:
• **COMPAGNIE GENERALE DES
ETABLISSEMENTS MICHELIN
63000 Clermont-Ferrand (FR)**
• **Michelin Recherche et Technique S.A.
1763 Granges-Paccot (CH)**

(72) Inventeur: **Spetler, Frédéric
63190 Lezoux (FR)**

(74) Mandataire: **Dequire, Philippe Jean-Marie Denis
23, Place des Carmes-Déchaux
SGD/LG/PI F35 Ladoux
63040 Clermont-Ferrand Cedex 09 (FR)**

(56) Documents cités:
**EP-A- 1 498 291      WO-A-02/08721
DE-A1- 4 242 726**

## Description

La présente invention a trait à la détection d'un début de phénomène d'hydroplanage d'un pneumatique sur une chaussée mouillée parcourue par un véhicule. Elle concerne plus particulièrement cette détection à partir de la mesure de contraintes dans la bande de roulement d'un pneumatique dudit véhicule.

Le phénomène d'hydroplanage se caractérise par la présence momentanée d'une quantité d'eau entre le sol composant la chaussée et la partie de la bande de roulement du pneumatique en contact avec le sol. Dans ce cas, le film formé par la présence de l'eau empêche tout ou partie de ce contact : il n'y a plus d'adhérence et donc plus de transfert d'efforts entre le véhicule et la chaussée.

Un film d'eau entre tout ou partie de la bande roulement du pneumatique en contact avec le sol et la chaussée se forme, lorsque le débit d'eau circulant entre ces deux surfaces devient supérieur au débit d'eau que peut évacuer à la fois le motif du revêtement du sol et celui du pneumatique. Cet effet de saturation est fonction de la hauteur d'eau présente sur la chaussée et de la vitesse du véhicule.

Les conséquences d'un hydroplanage lors d'une accélération par un effort moteur, lors d'une décélération par un effort freineur ou lors d'un changement de direction sont importantes et peuvent impliquer une perte partielle ou totale de contrôle du véhicule. Il est donc capital lors d'une circulation sur un sol mouillé de pouvoir anticiper les conditions d'un hydroplanage.

Vis-à-vis du conducteur du véhicule, aucun signe annonciateur ne précède le début d'un phénomène partiel ou total d'hydroplanage : le danger est soudain et imprévisible.

Il est connu par le document US-A-5 502 433 de détecter un risque de phénomène d'hydroplanage à partir de mesures de contraintes de cisaillement d'un pain dans l'aire de contact.

L'invention a pour objet de détecter un début de phénomène d'hydroplanage à partir de mesures différentes.

Dans ce qui suit, en dehors d'indications différentes, on entend généralement par :

- « aire de contact apparente » : la portion de la bande de roulement du pneumatique dans laquelle le ou les capteurs de la bande de roulement donnent un signal non nul ;
- aire « de contact direct » : la portion de la bande de roulement du pneumatique dans laquelle le contact entre le sol et la bande de roulement est direct ; et
- aire de « contact indirect » : la portion de la bande de roulement du pneumatique dans laquelle un film d'eau est disposé entre la bande de roulement et le sol.

L'invention a pour objet un procédé de détection d'un état d'hydroplanage d'un pneumatique d'un véhicule évoluant sur un sol mouillé selon la revendication 1.

La position d'un point de mesure correspond à un relevé longitudinal où est effectué la mesure de la contrainte de compression $\sigma_z$, selon un déploiement linéaire de la partie de la bande de roulement correspondant à la portion du signal extraite et $\dfrac{d\sigma_z}{dx}$ représente la dérivée première de la mesure de contrainte selon la valeur x de la position du capteur sur l'axe longitudinal X de roulement du pneumatique dans le plan de la chaussée.

Avantageusement, on déclenche une alarme lorsque la valeur momentanée $\Delta E$ dépasse un seuil donné.

Des mesures expérimentales réalisées avec des hauteurs d'eau sur la chaussée différentes ont montré que cette valeur momentanée $\Delta E$ est très sensible à un début d'hydroplanage sous le pain de mesure de la bande de roulement, par exemple un pain situé au centre de celle-ci. Lorsque ce phénomène intervient on constate une augmentation brutale de la valeur momentanée ce qui rend très aisé sa détection.

Selon un mode complémentaire de mise en oeuvre du procédé selon l'invention, l'étape de déduction d'une valeur momentanée $R_z$ correspond à :

- lorsque la portion du signal comprend deux plateaux successifs, la valeur momentanée ($R_z$) est égale à :

$$R_z = f(\sigma_{zi}, \sigma_{zd})$$

dans lequel $\sigma_{zi}$ représente l'amplitude des contraintes de compression du premier plateau, et $\sigma_{zd}$ représente l'amplitude des contraintes de compression du second plateau ; et

- lorsque la portion comprend un seul plateau, la valeur momentanée ($R_z$) est égale à une constante $C$ donnée.

Avantageusement, on a : $R_z = \dfrac{\sigma_{zi} - \sigma_{zd}}{\sigma_{zd}}$ et $C$ est égal à -1.

Avantageusement une alarme est déclenchée lorsque la valeur momentanée $R_z$ est supérieure à une valeur donnée, et préférentiellement lorsque la valeur momentanée est positive.

On peut aussi avoir : $R_z = \dfrac{\sigma_{zi}}{\sigma_{zd}}$ et $C$ est égal à 0 ; dans ce cas on déclenche préférentiellement une alerte lorsque le rapport devient supérieur ou égal à 1.

Il est aussi possible, dans le cadre de la présente invention, d'utiliser comme second critère l'amplitude de $\sigma_{zi}$.

Le seuil préférentiel correspond à la situation où les deux plateaux sont d'amplitude sensiblement identique. L'évolution de ce critère est progressive en fonction de la vitesse de roulage.

En revanche, le premier critère est lié à un saut de la valeur de $\Delta E$ qui intervient lorsque le front séparant les deux plateaux devient moins marqué que celui du premier plateau. Ce seuil se déclenche aussi lorsque le phénomène d'hydroplanage est bien marqué.

Ces deux critères sont bien entendu liés et il est très avantageux de les utiliser conjointement pour renforcer la robustesse et la fiabilité de la détection.

Avantageusement, on déclenche successivement une première alarme lorsque une première valeur momentanée ($\Delta E$, $R_z$) dépasse un seuil donné et une seconde alarme d'intensité supérieure lorsqu'une seconde valeur momentanée ($R_z$, $\Delta E$) dépasse un second seuil donné.

Le procédé selon l'invention a l'avantage de permettre d'avertir le conducteur d'un véhicule d'un risque d'hydroplanage en s'appuyant sur deux phénomènes physiques liés au phénomène d'hydroplanage. Le premier correspond à l'apparition d'un soulèvement du pain de mesure de la bande de roulement ce qui fait augmenter de façon brutale la valeur momentanée $\triangle E$ et le second au moment où les contraintes de compression sont sensiblement équivalentes ou dans un rapport donné dans la partie de l'aire de contact apparente dite de contact indirect et dans la seconde partie de l'aire de contact apparente dite de contact direct. Dans les deux cas, le conducteur doit être averti de ce que le phénomène d'hydroplanage devient très marqué. En fonction des types de pneumatique, des hauteurs d'eau, des natures et géométries des chaussées et des dispersions des mesures et traitements des signaux, ces deux seuils peuvent se déclencher dans des situations plus ou moins proches. A priori, le saut lié au premier critère se déclenche usuellement avant celui lié à l'équivalence des contraintes de compression des premier et second plateaux.

L'invention a aussi pour objet un dispositif de détection d'un phénomène d'hydroplanage d'un pneumatique d'un véhicule évoluant sur un sol mouillé d'une chaussée comportant :

- un pneumatique dont une bande de roulement est équipée d'un ou plusieurs capteurs permettant, chacun, de mesurer les contraintes de compression subies localement par la bande de roulement du pneumatique en roulage sur le sol,

- des moyens de transmission d'un signal correspondant aux mesures de ces contraintes ; et
- une unité de traitement de signaux capable d'extraire du signal transmis une portion de signal correspondant au nombre ou à la durée de passage du ou des capteurs dans l'aire de contact du pneumatique en roulage sur le sol.

Ce pneumatique est caractérisé en ce qu'il comporte, dans l'unité de traitement, un programme pour, à partir du signal extrait, mettre en oeuvre le procédé selon l'invention.

L'invention sera mieux comprise à la lecture de la description qui suit et à l'examen des figures qui l'accompagnent. Ces figures ne sont présentées qu'à titre indicatif et nullement limitatif de l'invention.

Ces figures montrent :

- Figure 1 : une représentation d'un capteur dans la bande de roulement d'un pneumatique ;
- Figure 2 : une représentation illustrant le traitement de signaux proposé par l'invention ;
- Figures 3 et 4 : des courbes représentant des relevés de mesures de contraintes normales dans l'aire de contact du pneumatique en fonction de différentes vitesses de roulage et pour deux hauteurs d'eau déterminées, respectivement 2 mm et 8 mm ;
- Figures 5 et 6 : des courbes représentant la dérivée première selon la valeur x du déplacement du capteur sur l'axe X des mesures de contraintes illustrées aux figures 3 et 4;
- Figure 7 : l'évolution en fonction de la vitesse du premier critère $\Delta E$; et
- Figure 8 : une évolution en fonction de la vitesse du second critère $R_z$.

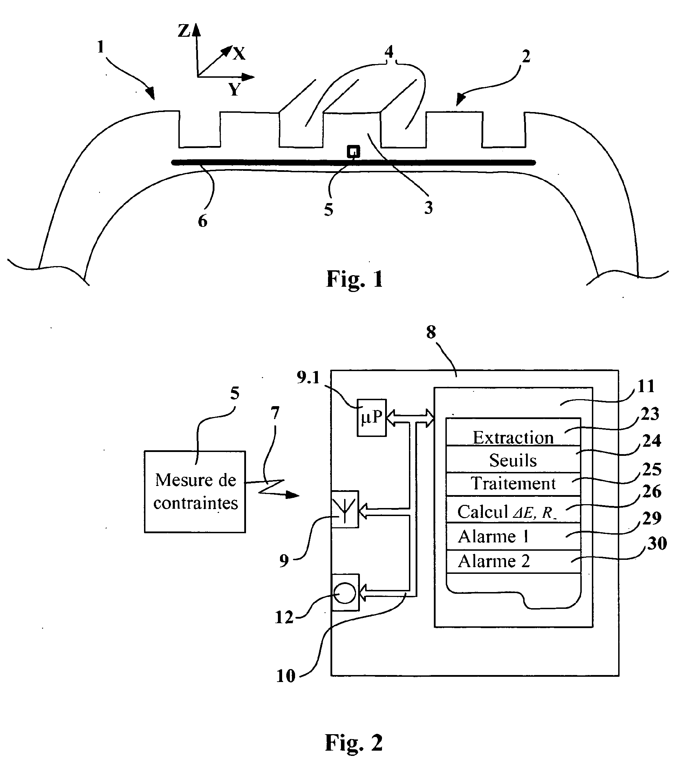

Sur la figure 1 est représentée très schématiquement une coupe axiale partielle d'un pneumatique 1 avec sa bande de roulement 2. Cette bande de roulement peut également correspondre à celle d'un bandage élastique non pneumatique.

La surface extérieure de la bande de roulement d'un pneumatique n'est pas lisse mais comprend usuellement un ensemble de sillons longitudinaux 4 et de rainures transversales ou sensiblement transversales pour faciliter l'évacuation de l'eau sur des chaussées mouillées. Les sillons et rainures définissent des pains de gomme qui viennent en contact avec le sol. L'ensemble correspond à la sculpture du pneumatique. A la figure 1, le pain de gomme 3 est disposé entre deux sillons 4 ainsi que deux rainures transversales non représentées.

Certains de ces pains 3 comportent un capteur 5 de contraintes (ou autre grandeur équivalente), on obtient alors un pain de mesure. Ce capteur 5 est implanté à la base du pain de mesure 3 et au-dessus des nappes de renforcement 6 de la structure du pneumatique. Il est souhaitable de veiller à placer le capteur 5 dans un volume de la gomme du pneumatique qui ne subira pas d'usure durant la durée de vie du pneumatique. De la sorte, les mesures sont possibles durant toute la durée de vie du pneumatique. Selon l'invention, les capteurs mesurant les contraintes sont placés, de préférence, sur des pains 3 placés au centre d'une largeur de pneumatique selon l'axe Y de la figure 1 c'est-à-dire entre ses deux épaules. Un placement de ce capteur à l'épaule reste néanmoins aisément possible dans le cadre de l'invention.

L'objectif de ces capteurs est de pouvoir mesurer une contrainte (ou une force) subie par la bande de roulement 2 du pneumatique ou, selon une variante, un déplacement voire une déformation de cette bande de roulement 2.

Les capteurs utilisés fonctionnent selon différentes technologies, il peut s'agir de jauges piézo-électriques ou piézo-résistives ou de condensateurs. On peut ainsi, par exemple, associer un capteur à effet Hall avec son élément magnétique l'ensemble noyé dans la gomme du pneumatique. On pourra pour plus de précision concernant les technologies employées pour ces capteurs se reporter à la lecture du document US-B-6 666 079 qui donne une description concernant différents capteurs de contrainte utilisés dans un pneumatique.

La figure 2 illustre le dispositif de mesure de l'invention comportant les capteurs 5 de mesure de contraintes ainsi que des moyens 7 de transmission du signal à une unité 8 de traitement de signaux. Le module de traitement 8 est, de préférence, placé dans le véhicule. On peut, dans une variante, placer ce module 8 dans le pneumatique lui-même. Selon cette variante, cela nécessite des moyens de transmission du signal traité au conducteur du véhicule.

L'homme du métier connaît par ailleurs les différentes formes possibles de moyens de transmission pour transmettre un signal entre un pneumatique et le véhicule. On peut, à cet effet, se reporter au document EP-A-1 350 640 qui illustre notamment une antenne implantée dans le pneumatique. Cette antenne est positionnée à l'intérieur même de la bande de roulement 2 et est reliée par un câble au capteur 5.

Il peut s'agir d'une antenne de champ électrique de type quart d'onde, ou encore de type modulation de fréquence ou d'amplitude de signal de puissance. Il est utile de préciser ici, qu'une antenne primaire fixée sur le véhicule en regard d'une antenne secondaire placée dans le pneumatique permet également, par effet d'inductance, une transmission de puissance de l'antenne primaire reliée par exemple à la batterie du véhicule à l'antenne secondaire de façon à fournir en énergie le capteur 5 de mesure. Une micro batterie insérée avec le capteur 5 dans un insert pré moulé de la bande de roulement 2 peut aussi assurer cette fonction.

A la figure 2, le signal correspondant aux mesures de contrainte est transmis, par les moyens 7, à l'unité 8 de traitement après réception par une antenne 9.

Par ailleurs, le fonctionnement du capteur 5 peut se faire via un circuit électronique de mesure de type CIAS (circuit électronique intégré à une application spécifique), un système d'alimentation tel que vu précédemment et un système de codage de la mesure, le tout avant la transmission des mesures constituant le signal à analyser. L'antenne 9 est reliée à un micro processeur 9.1 de l'unité de traitement 8 via un bus de jonction interne 10.

L'unité de traitement 8 comporte une mémoire programme 11. Le programme mémorisé permet, selon différentes sections de programmes, de traiter le signal jusqu'à l'obtention d'une information des premier $\Delta E$ et second $R_z$ critères. Une fois l'information obtenue, via le bus de liaison 10, un affichage peut être provoqué sur un afficheur 12 placé à l'intérieur même du véhicule.

Cet afficheur 12 se présente sous la forme, par exemple, d'un voyant pouvant prendre plusieurs couleurs en fonction du degré d'alerte pour être facilement interprétable. Il s'agit pour le conducteur de prendre en compte les alertes présentées afin de réguler en conséquence sa vitesse, en réduisant sa vitesse ou en adaptant son type de conduite selon par exemple une conduite plus souple.

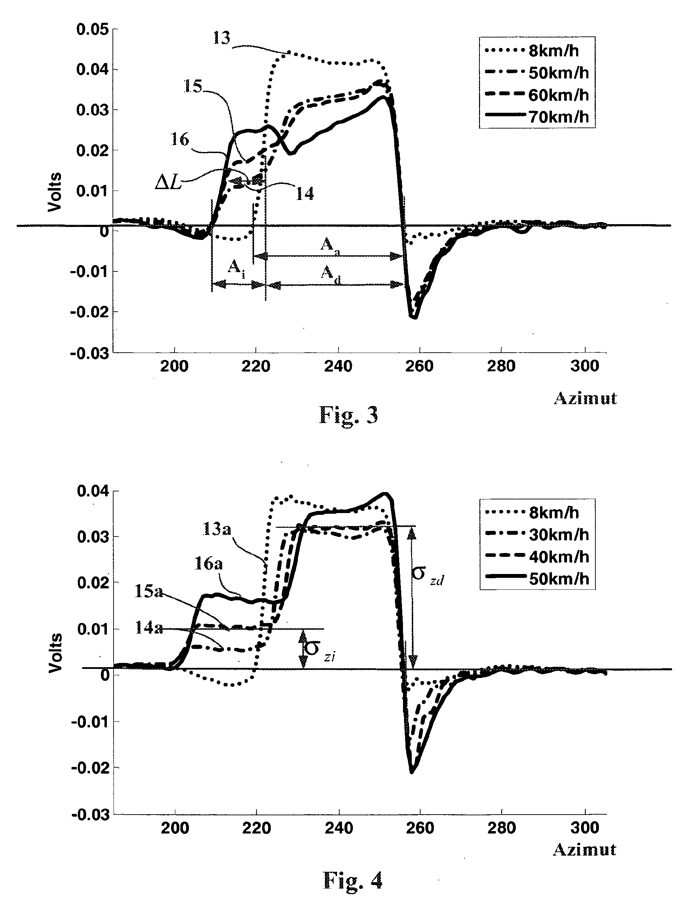

A la figure 3 sont représentées plusieurs courbes correspondant au signal obtenu par les mesures de contraintes normales en fonction du roulage de la bande de roulement 2 du pneumatique 1 sur le sol correspondant à la chaussée. Ces différentes courbes correspondent à différentes vitesses de roulage du pneumatique. En ordonnée, l'échelle est arbitraire et correspond aux valeurs données par le capteur de mesure en volts. En abscisse, les positions des points de mesure dans l'aire de contact sont données à partir du numéro d'ordre des mesures concernées. L'échantillonnage est réalisé avec 512 mesures par tour. Ces numéros d'ordre sont directement reliés à l'azimut du point de mesure.

Ainsi, le déploiement linéaire d'une circonférence totale, à savoir un tour complet du pneumatique étudié sur la chaussée correspond en abscisse, dans l'exemple considéré, à 512 points de mesure.

A la figure 3, on voit que les signaux de mesure ont une amplitude quasiment nulle au début et à la fin des signaux, en faisant abstraction d'un faible offset. Pour simplifier, dans ce cas de mesures de contraintes normales au sol, on appelle « aire de contact apparente » la portion des signaux de mesure dans laquelle l'amplitude de ces signaux est positive. Une valeur positive des signaux de mesure correspond à une compression du pain de gomme 3, et une valeur négative correspond à une extension du pain de gomme.

A la figure 3, le signal a été obtenu expérimentalement pour une hauteur d'eau prédéterminée sur la chaussée de 2 mm. Les contraintes mesurées, sont celles correspondant à des contraintes de compression subies par la bande de roulement 2 du pneumatique 1 et plus précisément par un capteur 5 de la bande de roulement lors de son passage dans l'aire de contact avec le plan de la chaussée et ce, selon une direction normale au plan de la chaussée.

La courbe 13 de la figure 3 représente un signal correspondant à des mesures de contraintes pour une faible vitesse de roulage du pneumatique, à savoir 8 km/h. A cette faible vitesse, la présence d'une hauteur d'eau sur la chaussée n'a pas de conséquence sur le signal de contrainte normale et le signal détecté à cette vitesse correspond à celui qu'on peut retrouver sur une route complètement sèche. Ainsi, lorsque le ou les capteurs de contrainte se trouvent en dehors de l'aire de contact directe de la bande de roulement avec le sol de la chaussée, les contraintes mesurées sont sensiblement nulles. La partie de la courbe correspondant aux mesures de contraintes négatives correspond à une section de la bande de roulement quittant la zone d'écrasement sur le sol et reprenant la courbure naturelle du pneumatique.

Avec la définition précédente, on peut estimer la longueur de l'aire de contact apparente $A_a$, qui dans ce cas est aussi l'aire de contact directe $A_d$, par la portion de la courbe 13 indiquée $A_a$.

Les courbes 14, 15 et 16 ont été obtenues expérimentalement pour la même hauteur d'eau de 2 mm aux vitesses respectivement de 50, 60 et 70 km/h. Ces courbes ont une allure sensiblement différente de celle de la courbe 13. En ayant recalé toutes les courbes au point où, à l'arrière de l'aire de contact, la contrainte repasse par zéro, on constate que l'aire de contact apparente $A_a$ est sensiblement allongée au début de l'aire de contact. On voit apparaître un premier plateau dont la hauteur augmente avec la vitesse, on peut estimer que la longueur de ce premier plateau $\Delta L$ correspond à la longueur de la zone de contact indirecte $A_i$ c'est-à-dire la zone dans laquelle un film d'eau se trouve entre la bande de roulement et le sol. On voit aussi que la longueur de la zone de contact direct $A_d$ est sensiblement diminuée relativement à celle de la courbe 13.

La présence du premier plateau sur le signal étudié et ce, dès le roulage du pneumatique à une vitesse, par exemple de 40 km/h, a pour source l'apparition de nouvelles contraintes.

Ces nouvelles contraintes ont pour origine une hauteur d'eau présente juste devant le pneu sur toute sa largeur, selon l'axe Y de la bande de roulement 2. Cette hauteur d'eau a pour effet ainsi d'établir un contact intermédiaire entre le sol de la chaussée et la bande de roulement 2 du pneumatique et ce avant le contact direct d'un capteur avec le sol de la chaussée.

La contrainte s'établit donc toujours entre le sol et la bande de roulement 2 du pneumatique mais via l'élément liquide constituant la hauteur d'eau. Le premier plateau obtenu sur le signal est donc celui d'un capteur détectant une contrainte sur le sol via l'élément liquide correspondant à cette hauteur d'eau. Ce signal représente donc la résistance opposée par l'eau au pain du pneu (pression hydrostatique), qui dépend de la vitesse de roulage selon $P \approx \dfrac{1}{2} \rho V^2$ ($\rho$ : masse volumique, V : vitesse de roulage). La hauteur d'eau présente à faible vitesse n'a pas pour effet de présenter un même premier plateau sur le signal mesuré car l'entrée du capteur dans le volume d'eau correspondant exige une vitesse suffisante afin de créer une tension ou une résistance suffisante de la part de l'élément liquide et par conséquent une contrainte significative.

A la figure 4, on retrouve en ordonnée et en abscisse les mêmes paramètres décrits pour la figure 3, on retrouve également les courbes respectivement 13a, 14a, 15a et 16a correspondant aux vitesses de 8, 30, 40 et 50 km/h de roulage du pneumatique mais pour une hauteur d'eau sur la chaussée de 8 mm.

A faible vitesse (8 km/h) la courbe 13a est très sensiblement identique à la courbe 13 obtenue pour une hauteur d'eau de 2 mm. Pour des vitesses significatives du véhicule, en l'occurrence 30, 40 et 50 km/h, on constate à nouveau l'apparition de l'allongement de l'aire de contact $\Delta L$ sur la chaussée. Ces résultats sont obtenus pour un pneu utilisé, strictement identique à celui ayant servi pour les résultats de la figure 3, en l'occurrence un pneumatique Michelin Energy 195/65R15 XH1.

Dans ce dernier cas, l'allongement $\Delta L$ de l'aire de contact est supérieur à celui obtenu pour une hauteur d'eau inférieure à 2 mm car la hauteur d'eau présente de façon frontale devant la largeur de la bande de roulement du pneumatique est plus importante.

Ainsi, le contact établi par la présence de ce milieu liquide entre la bande de roulement du pneumatique et le sol de la chaussée s'établit plus haut sur le pneu donc plus tôt. Le capteur entre plus tôt dans la partie correspondant à l'aire de contact indirect (car se faisant par l'intermédiaire d'un film d'eau) apparent entre le sol et la bande roulement 2 du pneumatique 1. La partie du signal correspondant à l'allongement $\Delta L$ de l'aire de contact est donc plus importante.

Puis, à partir d'un indice de mesure proche de 225, le contact est à nouveau direct entre le sol et la bande de roulement, on retrouve un signal de contraintes pour les courbes 14a, 15a et 16a, sensiblement similaire à celui obtenue pour les courbes 14, 15 et 16, de la figure 3.

Le passage d'un capteur de la bande de roulement dans l'aire de contact sur le sol de la chaussée présente donc deux parties : une première partie correspondant à un contact du capteur avec le sol de la chaussée, mais par l'intermédiaire d'un élément liquide ($A_i$) et une seconde partie correspondant à un contact direct du capteur avec le sol de la chaussée ($A_d$).

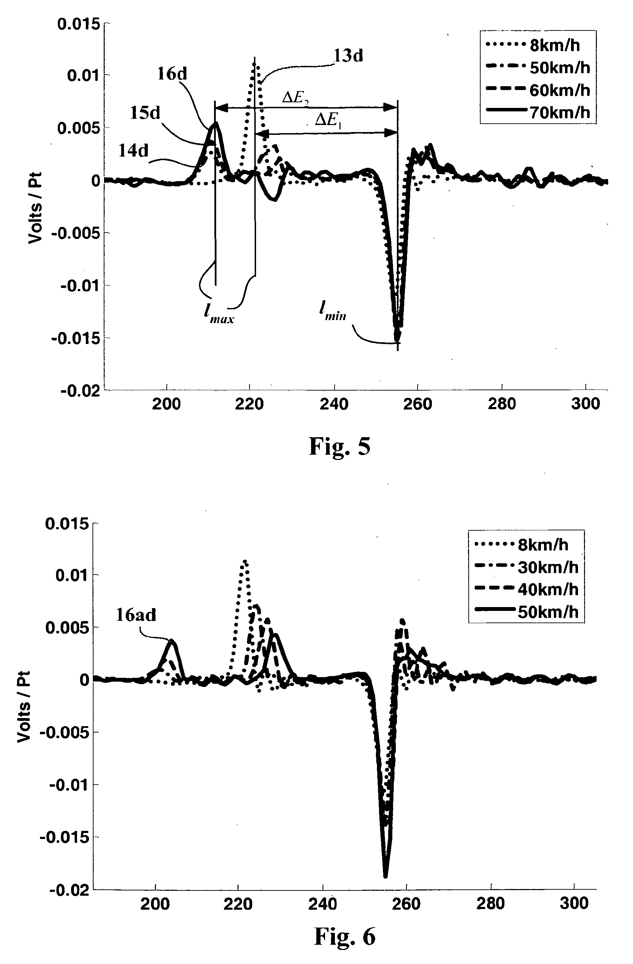

La figure 5 illustre le calcul d'une première valeur momentanée ou critère $\Delta E$ utilisé pour détecter l'apparition d'un phénomène d'hydroplanage selon l'invention.

Cette figure présente les courbes 13d à 16d représentant respectivement la dérivée première des mesures de contraintes de compression selon la valeur x du déplacement d'un capteur dans la direction longitudinale X de roulement du pneumatique. Les courbes 13d à 16d correspondent aux dérivées des courbes 13 à 16 illustrées à la figure 3.

Pour les quatre courbes, les minimums respectifs des dérivés de mesures de contraintes sont obtenus pour l'indice de mesure 255, c'est-à-dire en sortie de l'aire de contact. Les maximums sont obtenus lors des phases respectives d'apparition des plateaux de mesures constantes des contraintes. On obtient ainsi pour les faibles vitesses correspondant à la courbe 13d un maximum dès l'apparition du seul et unique plateau. La valeur du premier critère est alors $\Delta E_1$. Pour une vitesse supérieure de 50 km/h, courbe 14d, on observe deux pics positifs à l'entrée de l'aire de contact correspondant aux deux fronts successifs des premier et second plateaux. Pour la courbe 14d, le pic d'amplitude maximum est le second et la valeur de $\Delta E$ est calculée en utilisant ce second pic. La valeur correspondante du critère est légèrement inférieure à la valeur initiale de $\Delta E_1$. Il n'y a pas encore eu de saut.

En revanche, pour les courbes 15d et 16d, obtenues aux vitesses de 60 et 70 km/h, les pics positifs d'amplitude maximum sont les premiers. En conséquence, le saut de valeur du premier critère a eu lieu.

La valeur momentanée $\Delta E$ a pour expression : $\Delta E = I_{min} - I_{max}$ avec $I_{min}$ correspondant à la position ou l'azimut de $\left(\dfrac{d\sigma_z}{dx}\right)_{min}$ et $I_{max}$ correspondant à la position ou l'azimut de $\left(\dfrac{d\sigma_z}{dx}\right)_{max}$ .

Dans le cas de la courbe 13d, à faible vitesse, le premier critère a une valeur $\Delta E_1$ et dans le cas de la courbe 16d, obtenue à une vitesse de 50 km/h, une valeur $\Delta E_2$. La valeur $\Delta E_2$ est très notablement supérieure à $\Delta E_1$.

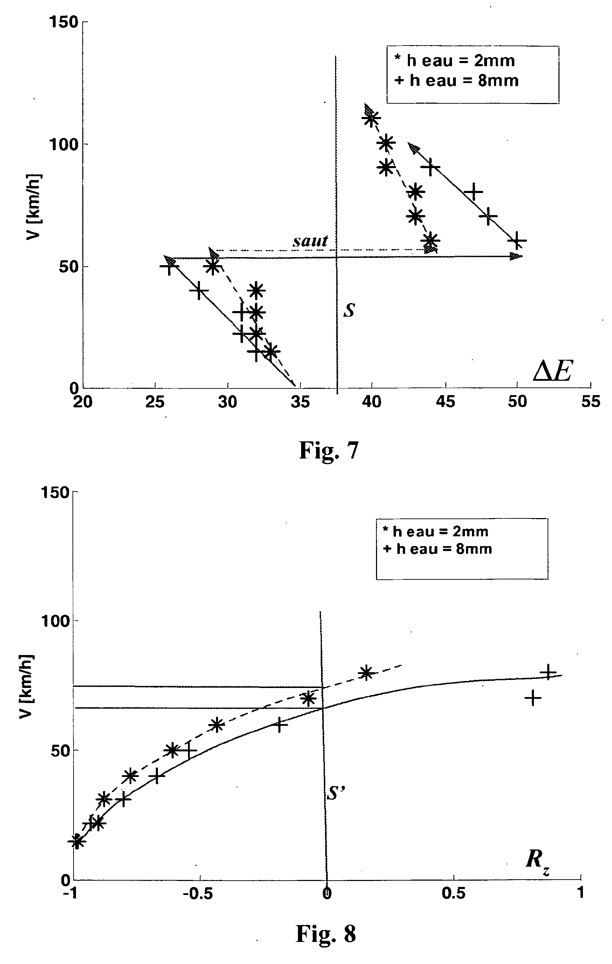

Cette différence très marquée illustrée aussi à la figure 7 montre tout l'intérêt de ce premier critère pour détecter l'apparition d'un phénomène d'hydroplanage. Dès que la valeur du critère ou valeur momentanée devient supérieure à une fourchette comprise entre 35-40, cela veut dire que le saut a eu lieu. La valeur du seuil S est avantageusement comprise dans cette fourchette. Ce saut est lié à l'évolution d'un plateau anticipé ou premier plateau lié à l'apparition d'une aire de contact indirect, c'est-à-dire d'un film d'eau sensible à l'avant du pneumatique. Dès que ce saut est détecté, il convient de faire parvenir au conducteur une alerte de risque d'hydroplanage. Les flèches montrent l'influence de la vitesse pour l'évolution du critère.

La figure 4 illustre le calcul du second critère ou valeur momentanée $R_z$. Ce critère correspond à :

$$R_z = \frac{\sigma_{zi} - \sigma_{zd}}{\sigma_{zd}}$$

dans lequel $\sigma_{zi}$ représente l'amplitude des contraintes de compression du premier plateau, et $\sigma_{zd}$ représente l'amplitude des contraintes de compression du second plateau. Bien entendu dans le cas de la courbe 13a, la valeur du critère est -1 puisqu'il n'y a qu'un seul plateau.

La figure 8 présente l'évolution de ce second critère en fonction de la vitesse. On voit que sa valeur passe progressivement de -1 à zéro puis devient positive. Le passage par zéro correspond au moment où les contraintes de compression des premier et second plateaux deviennent similaires ce qui veut dire que le phénomène d'hydroplanage devient très marqué. Il est alors indispensable d'avertir immédiatement le conducteur de ce risque. On peut choisir comme valeur seuil S' ce passage par zéro ou une valeur inférieure si on le souhaite. La figure 8 illustre aussi l'évolution de ce second critère pour les deux hauteurs d'eau 2 et 8 mm. Sans surprise, on constate que plus la vitesse augmente plus l'influence de la hauteur d'eau est nette. On note aussi qu'au-delà de la valeur nulle du critère, l'influence de la vitesse est très marquée. Une faible variation de vitesse de roulage peut entraîner de très fortes variations dans le phénomène d'hydroplanage.

En revenant à la figure 2 du dispositif de l'invention, un sous programme 23 du programme 11 de l'unité de traitement 8 permet d'extraire une partie du signal reçu par les capteurs correspondant à un signal de contrainte sensiblement non nul, par exemple typiquement supérieur en valeur absolue à un seuil.

Ainsi, l'extraction de la partie du signal, pour des contraintes de pression, correspondant au passage d'un ou plusieurs capteurs dans l'aire de contact de la bande de roulement 2 consiste à extraire le signal lorsque le (ou les) capteur émet un signal significatif de mesure de contrainte la durée de cette portion du signal correspond à la durée du passage du capteur dans l'aire de contact.

A l'aide d'un sous programme 25, un traitement des données est effectué pour obtenir le calcul des critères $\Delta E$ et $R_z$ (section 26). Une comparaison est alors effectuée avec des seuils enregistrés dans la zone de données 24. Une première alarme est déclenchée si un premier critère dépasse un premier seuil (section 29) et une seconde alarme est déclenchée si un second critère dépasse un second seuil (section 30).

L'invention n'est pas limitée aux exemples décrits et représentés et diverses modifications peuvent y être apportées sans sortir de son cadre défini par les revendications annexées.

**Revendications**

**1.** Procédé de détection d'un état d'hydroplanage d'un pneumatique d'un véhicule évoluant sur un sol mouillé, la bande de roulement du pneumatique étant équipée d'un ou plusieurs capteurs (5) permettant chacun de mesurer la compression subie localement par la bande de roulement du pneumatique lorsque le pneumatique roule sur le sol et de produire un signal correspondant à ces mesures, **caractérisé en ce qu'**il comporte les étapes suivantes :

- mesurer la compression normale au plan de la chaussée ($\sigma_z$) lorsque le pneumatique roule sur le sol ;
- produire un signal correspondant à ces mesures ;
- extraire de ce signal une portion relative au passage du ou des capteurs dans l'aire de contact apparente du pneumatique sur le sol ;
- déduire de cette information une valeur momentanée ($\Delta E$, $R_z$) reliée à la présence d'une zone de contact indirect de l'aire de contact apparente de la bande de roulement du pneumatique sur le sol ; et
- déclencher une alarme lorsque la valeur momentanée satisfait une relation donnée ; dans lequel l'étape de déduction d'une valeur momentanée correspond à :
- dériver le sig,nal ;

- déterminer les valeurs minimale $\left(\dfrac{d\sigma_z}{dx}\right)_{\min}$

et maximale $\left(\dfrac{d\sigma_z}{dx}\right)_{\max}$ du signal dérivé ainsi que leurs positions ($l_{min}$, $l_{max}$); et
- calculer la valeur momentanée $\Delta E$ correspondant à l'écart de position entre les valeurs minimale et maximale du signal dérivé :

$$\Delta E = l_{min} - l_{max}$$

**2.** Procédé selon la revendication 1, dans lequel on déclenche une alarme lorsque la valeur momentanée $\Delta E$ dépasse un seuil donné.

**3.** Procédé de détection d'un état d'hydroplanape d'un pneumatique d'un véhicule évoluant sur un sol mouillé, la bande de roulement du pneumatique étant équipée d'un ou plusieurs capteurs (5) permettant chacun de mesurer la compression subie localement par la bande de roulement du pneumatigue lorsque le pneumatique roule sur le sol et de produire un signal correspondant à ces mesures, **caractérisé en ce qu'**il comporte les étapes suivantes :

- mesurer la compression normale au plan de la chaussée ($\sigma_z$) lorsque le pneumatique roule sur le sol ,
- produire un signal correspondant à ces mesures ;
- extraire de ce signal une portion relative au passage du ou des capteurs dans l'aire de contact apparente du pneumatique sur le sol ;
- déduire de cette information une valeur momentanée ($\Delta E$, $R_z$) reliée à la présence d'une zone de contact indirect de l'aire de contact apparente de la bande de roulement du pneumatique sur le sol ; et
- déclencher une alarme lorsque la valeur momentanée satisfait une relation donnée ; dans lequel l'étape de déduction d'une valeur momentanée ($R_z$) correspond à:
- lorsque la portion du signal comprend deux plateaux successifs, la valeur momentanée ($R_z$) est égale à :

$$R_z = f(\sigma_{zi}, \sigma_{zd})$$

dans lequel $\sigma_{zi}$ représente l'amplitude des contraintes de compression du premier plateau et $\sigma_{zd}$ représente l'amplitude des contraintes de compression du second plateau ; et
- lorsque la portion comprend un seul plateau la valeur momentanée ($R_z$) est égale à une constante $C$.

**4.** Procédé selon la revendication 3, dans lequel on a :

$$R_z = f(\sigma_{zi}, \sigma_{zd}) = \frac{\sigma_{zi} - \sigma_{zd}}{\sigma_{zd}}$$

et dans lequel C est égale à -1.

**5.** Procédé selon la revendication 3, dans lequel on a :

$$R_z = f(\sigma_{zi}, \sigma_{zd}) = \frac{\sigma_{zi}}{\sigma_{zd}}$$

et dans lequel C est égale à 0.

**6.** Procédé selon l'une des revendications 3 à 5, dans lequel une alarme est déclenchée lorsque la valeur momentanée ($R_z$) est supérieure à une valeur donnée.

**7.** Procédé selon la revendication 6 prise en combinaison avec la revendication 4, dans lequel une alarme est déclenchée lorsque la valeur momentanée ($R_z$) est positive.

**8.** Procédé selon la revendication 6 prise en combinaison avec la revendication 5, dans lequel une alarme est déclenchée lorsque la valeur momentanée ($R_z$) est supérieure à 1.

**9.** Procédé selon l'une des revendications 1 à 8, dans lequel on déclenche successivement une première alarme lorsque la première valeur momentanée ($\Delta E$) dépasse un seuil donné et une seconde alarme d'intensité supérieure lorsque la seconde valeur momentanée ($R_z$) dépasse un second seuil donné.

**10.** Dispositif de détection d'un phénomène d'hydroplanage d'un pneumatique d'un véhicule évoluant sur un sol mouillé d'un chaussée comportant :

- un pneumatique dont une bande de roulement est équipée d'un ou plusieurs capteurs (5) permettant, chacun, de mesurer les contraintes de compression subies localement par la bande de roulement du pneumatique en roulage sur le sol,
- des moyens de transmission d'un signal correspondant aux mesures de ces contraintes;
- une unité de traitement de signaux capable d'extraire du signal transmis, une portion de signal correspondant au nombre ou à la durée de passage du ou des capteurs dans l'aire de contact du pneumatique en roulage sur le sol ;

**caractérisé en ce qu'**il comporte, dans l'unité de traitement, un programme pour, à partir du signal extrait mettre en oeuvre le procédé selon l'une des revendications 1 à 9.

**Patentansprüche**

**1.** Verfahren zur Erfassung eines Aquaplaning-Zustands eines Luftreifens eines Kraftfahrzeugs, der sich auf einem nassen Boden bewegt, wobei der Laufstreifen des Luftreifens mit einem oder mehreren Sensoren (5) ausgestattet ist, von denen jeder die Messung der lokal vom Laufstreifen des Luftreifens erfahrenen Druckbelastung, wenn der Luftreifen auf dem Boden rollt, und die Erzeugung eines diesen Messungen entsprechenden Signals ermöglicht, **dadurch gekennzeichnet, dass** es die folgenden Schritte aufweist:

- Messen der Druckbelastung senkrecht zur Ebene der Straße ($\sigma_z$), wenn der Luftreifen auf dem Boden rollt;
- Erzeugen eines diesen Messungen entsprechenden Signals;
- Entnahme aus diesem Signal eines Teils bezüglich des Durchgangs des oder der Sensoren durch den scheinbaren Kontaktbereich des Luftreifens auf dem Boden;
- Herleiten, von dieser Information, eines Augenblickswerts ($\Delta E$, $R_z$), der mit dem Vorhandensein einer Zone indirekten Kontakts des scheinbaren Kontaktbereichs des Laufstreifens des Luftreifens auf dem Boden verbunden ist; und
- Auslösen eines Alarms, wenn der Augenblickswert eine gegebene Beziehung erfüllt;

wobei der Schritt der Herleitung eines Augenblickswerts entspricht:

- dem Ableiten des Signals;

- der Festlegung des Minimalwerts $\left(\dfrac{d\sigma_z}{dx}\right)_{min}$ und Maximalwerts $\left(\dfrac{d\sigma_z}{dx}\right)_{max}$ des abgeleiteten Signals sowie ihrer Positionen ($l_{min}$, $l_{max}$); und
- dem Berechnen des Augenblickswerts $\Delta E$ entsprechend der Positionsabweichung zwischen dem Minimal- und dem Maximalwert des abgeleiteten Signals:

$$\Delta E = l_{min} - l_{max}.$$

**2.** Verfahren nach Anspruch 1, wobei ein Alarm ausgelöst wird, wenn der Augenblickswert $\Delta E$ eine gegebene Schwelle überschreitet.

**3.** Verfahren zur Erfassung eines Aquaplaning-Zustands eines Luftreifens eines Fahrzeugs, der sich auf einem nassen Boden bewegt, wobei der Laufstreifen des Luftreifens mit einem oder mehreren Sensoren (5) ausgestattet ist, von denen jeder die Messung der lokal vom Laufstreifen des Luftreifens erfahrenen Druckbelastung, wenn der Luftreifen auf dem Boden rollt, und die Erzeugung eines diesen Messungen entsprechenden Signals ermöglicht, **dadurch gekennzeichnet, dass** es die folgenden Schritte aufweist:

- Messen der Druckbelastung senkrecht zur Ebene der Straße ($\sigma_z$), wenn der Luftreifen auf dem Boden rollt;

- Erzeugen eines diesen Messungen entsprechenden Signals;
- Entnahme aus diesem Signal eines Teils bezüglich des Durchgangs des oder der Sensoren durch den scheinbaren Kontaktbereich des Luftreifens auf dem Boden;
- Herleiten, von dieser Information, eines Augenblickswerts ($\Delta E$, $R_z$), der mit dem Vorhandensein einer Zone indirekten Kontakts des scheinbaren Kontaktbereichs des Laufstreifens des Luftreifens auf dem Boden verbunden ist; und
- Auslösen eines Alarms, wenn der Augenblickswert eine gegebene Beziehung erfüllt;

wobei der Schritt der Herleitung eines Augenblickswerts ($R_z$) entspricht:

- wenn der Teil des Signals zwei aufeinanderfolgende Plateaus enthält, der Augenblickswert ($R_z$) gleich:

$$ R_z \;=\; f\!\left(\sigma_{zi}, \sigma_{zd}\right) $$

ist, wobei $\sigma_{zi}$ die Amplitude der Druckspannungen des ersten Plateaus und $\sigma_{zd}$ die Amplitude der Druckspannungen des zweiten Plateaus darstellt; und
- wenn der Teil ein einziges Plateau enthält, der Augenblickswert ($R_z$) gleich einer Konstanten C ist.

4. Verfahren nach Anspruch 3, bei dem gilt:

$$ R_z = f\!\left(\sigma_{zi}, \sigma_{zd}\right) = \frac{\sigma_{zi} - \sigma_{zd}}{\sigma_{zd}} $$

und bei dem C gleich -1 ist.

5. Verfahren nach Anspruch 3, bei dem gilt:

$$ R_z = f\!\left(\sigma_{zi}, \sigma_{zd}\right) = \frac{\sigma_{zi}}{\sigma_{zd}} $$

und bei dem C gleich 0 ist.

6. Verfahren nach einem der Ansprüche 3 bis 5, wobei ein Alarm ausgelöst wird, wenn der Augenblickswert ($R_z$) höher als ein gegebener Wert ist.

7. Verfahren nach Anspruch 6 in Kombination mit Anspruch 4, wobei ein Alarm ausgelöst wird, wenn der Augenblickswert ($R_z$) positiv ist.

8. Verfahren nach Anspruch 6 in Kombination mit Anspruch 5, wobei ein Alarm ausgelöst wird, wenn der Augenblickswert ($R_z$) höher als 1 ist.

9. Verfahren nach einem der Ansprüche 1 bis 8, wobei nacheinander ein erster Alarm ausgelöst wird, wenn der erste Augenblickswert ($\Delta E$) eine gegebene Schwelle überschreitet, und ein zweiter Alarm höherer Intensität ausgelöst wird, wenn der zweite Augenblickswert ($R_z$) eine zweite gegebene Schwelle überschreitet.

10. Vorrichtung zur Erfassung eines Aquaplaning-Phänomens eines Luftreifens eines Fahrzeugs, der sich auf einem nassen Boden einer Straße bewegt, die aufweist:

- einen Luftreifen, von dem ein Laufstreifen mit einem oder mehreren Sensoren (5) ausgestattet ist, von denen jeder die Messung der lokal vom Laufstreifen des Luftreifens beim Rollen auf dem Boden erfahrenen Druckspannungen erlaubt,
- Einrichtungen zur Übertragung eines den Messungen dieser Spannungen entsprechenden Signals;
- eine Signalverarbeitungseinheit, die aus dem übertragenen Signal einen Signalteil entnehmen kann, der der Anzahl oder der Dauer des Durchgangs des oder der Sensoren durch den Kontaktbereich des Luftreifens beim Rollen auf dem Boden entspricht;

**dadurch gekennzeichnet, dass** sie in der Verarbeitungseinheit ein Programm aufweist, um ausgehend von dem entnommenen Signal das Verfahren nach einem der Ansprüche 1 bis 9 durchzuführen.

**Claims**

1. Method of detecting a state of hydroplaning of a tyre of a vehicle travelling on wet ground, the tread of the tyre being equipped with one or more sensors (5) each capable of measuring the compression undergone locally by the tyre tread when the tyre is rolling on the ground and of producing a signal corresponding to these measurements, **characterized in that** it comprises the following steps:

- the compression normal to the plane of the road ($\sigma_z$) is measured when the tyre is rolling on the ground;
- a signal corresponding to these measurements is produced;
- a portion of this signal relating to the passing of the sensor or sensors into the apparent area of contact between the tyre and the ground is extracted;

- an instantaneous value ($\Delta E$, $R_z$), connected with the presence of an indirect contact region of the apparent area of contact between the tyre tread and the ground, is deduced from this information and;

- an alarm is triggered when the instantaneous value satisfies a given relationship;

in which the step of deducing an instantaneous value corresponds to:

- differentiating the signal;

- determining the minimum value $\left(\dfrac{d\sigma_z}{dx}\right)_{\min}$ and the maximum value $\left(\dfrac{d\sigma_z}{dx}\right)_{\max}$ of the differentiated signal and also their positions ($l_{min}$, $l_{max}$); and

- calculating the instantaneous value $\Delta E$ corresponding to the difference in position between the minimum and maximum values of the differentiated signal:

$$\Delta E = l_{min} - l_{max}.$$

**2.** Method according to Claim 1, in which an alarm is triggered when the instantaneous value $\Delta E$ exceeds a given threshold.

**3.** Method of detecting a state of hydroplaning of a tyre of a vehicle travelling on wet ground, the tread of the tyre being equipped with one or more sensors (5) each capable of measuring the compression undergone locally by the tyre tread when the tyre is rolling on the ground and of producing a signal corresponding to these measurements, **characterized in that** it comprises the following steps:

- the compression normal to the plane of the road ($\sigma_z$) is measured when the tyre is rolling on the ground;

- a signal corresponding to these measurements is produced;

- a portion of this signal relating to the passing of the sensor or sensors into the apparent area of contact between the tyre and the ground is extracted;

- an instantaneous value ($\Delta E$, $R_z$), connected with the presence of an indirect contact region of the apparent area of contact between the tyre tread and the ground, is deduced from this information and;

- an alarm is triggered when the instantaneous value satisfies a given relationship;

in which the step of deducing an instantaneous value ($R_z$) is such that:

- when the signal portion comprises two successive plateaus, the instantaneous value ($R_z$) is equal to:

$$R_z = f(\sigma_{zi}, \sigma_{zd})$$

in which $\sigma_{zi}$ represents the amplitude of the compressive stresses of the first plateau and $\sigma_{zd}$ represents the amplitude of the compressive stresses of the second plateau; and

- when the portion comprises a single plateau, the instantaneous value ($R_z$) is equal to a constant C.

**4.** Method according to Claim 3, in which:

$$R_z = f(\sigma_{zi}, \sigma_{zd}) = \frac{\sigma_{zi} - \sigma_{zd}}{\sigma_{zd}}$$

and in which C is equal to -1.

**5.** Method according to Claim 3, in which:

$$R_z = f(\sigma_{zi}, \sigma_{zd}) = \frac{\sigma_{zi}}{\sigma_{zd}}$$

and in which C is equal to 0.

**6.** Method according to one of Claims 3 to 5, in which an alarm is triggered when the instantaneous value ($R_z$) is above a given value.

**7.** Method according to Claim 6 taken in combination with Claim 4, in which an alarm is triggered when the instantaneous value ($R_z$) is positive.

**8.** Method according to Claim 6 taken in combination with Claim 5, in which an alarm is triggered when the instantaneous value ($R_z$) is greater than 1.

**9.** Method according to one of Claims 1 to 8, in which two alarms are triggered in succession, a first alarm when the first instantaneous value ($\Delta E$) exceeds a given threshold and a second alarm of greater intensity when the second instantaneous value ($R_z$) exceeds a second given threshold.

**10.** A device for detecting the hydroplaning of a tyre of a vehicle travelling on wet ground, comprising:

> - a tyre, the tread of which is equipped with one or more sensors (5) each capable of measuring the compressive stresses undergone locally by the tyre tread rolling on the ground;
> - means for transmitting a signal corresponding to the measurements of these stresses; and
> - a signal processing unit capable of extracting, from the transmitted signal, a signal portion corresponding to the number or to the duration of passage of the sensor or sensors in the area of contact of the tyre rolling on the ground,

**characterized in that** it includes, in the processing unit, a program for implementing the method according to one of Claims 1 to 9 on the basis of the extracted signal.

**Fig. 1**

**Fig. 2**

Fig. 3

Fig. 4

Fig. 5

Fig. 6

**Fig. 7**

**Fig. 8**

**EP 1 977 940 B1**

**RÉFÉRENCES CITÉES DANS LA DESCRIPTION**

**Documents brevets cités dans la description**

- US 5502433 A
- US 6666079 B
- EP 1350640 A